# EUROPEAN PATENT SPECIFICATION

(11) **EP 4 030 821 B1**
(45) Date of publication and mention of the grant of the patent: **18.11.2026**
(21) Application number: 19947685.4
(22) Date of filing: 30.09.2019
(51) Int. Cl.: H04W 28/18, H04L 5/00

(54) **COMMUNICATION METHOD AND APPARATUS**
KOMMUNIKATIONSVERFAHREN UND -VORRICHTUNG
PROCÉDÉ ET APPAREIL DE COMMUNICATION

(43) Date of publication of application: 20.07.2022
(73) Proprietor: Huawei Technologies Co., Ltd., Longgang District, Shenzhen, Guangdong 518129 (CN)
(72) Inventor: GAO, Fei, Shenzhen, Guangdong 518129 (CN); JIAO, Shurong, Shenzhen, Guangdong 518129 (CN); HUA, Meng, Shenzhen, Guangdong 518129 (CN)
(74) Representative: Maiwald GmbH
(86) International application number: PCT/CN2019/109772
(87) International publication number: WO 2021/062843

(56) References cited:
- EP-A1- 3 139 684
- CN-A- 107 852 310
- CN-A- 110 235 484
- US-A1- 2011 205 978
- US-A1- 2015 223 265
- US-A1- 2019 098 580
- US-A1- 2019 110 279
- QUALCOMM INCORPORATED: "Maintenance for physical downlink control channel", 3GPP DRAFT; R1-1809426_MAINTENANCE FOR PHYSICAL DOWNLINK CONTROL CHANNEL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Gothenburg, Sweden; 20180820 - 20180824, 11 August 2018 (2018-08-11), Mobile Competence Centre ; 650, route des Lucioles ; F-06921 Sophia-Antipolis Cedex ; France, XP051516789

## Description

### TECHNICAL FIELD

This application relates to the communication field, and in particular, to a communication method and apparatus.

### BACKGROUND

In a cross-carrier scheduling (cross-carrier scheduling) scenario, a scheduling cell (scheduling cell) may schedule one or more scheduled cells (scheduled cells). The scheduling cell may be a primary cell (primary cell, PCell) operating on a primary component carrier (primary component carrier, PCC), and the scheduled cell may be a secondary cell (secondary cell, SCell) operating on a secondary component carrier (secondary component carrier, SCC). Both downlink control information (downlink control information, DCI) of the scheduling cell and DCI of the scheduled cell are carried on the scheduling cell. Therefore, a network device needs to send, based on a capability supported by a terminal device, for example, monitoring a maximum number of blind detection (blind detection, BD) times in a single cell and a maximum number of control channel elements (control channel elements, CCEs) in one slot (slot), configuration information of a search space (search space, SS) set to the terminal device by using radio resource control (radio resource control, RRC) signaling. Correspondingly, the terminal device needs to monitor (monitor) a physical downlink control channel (physical downlink control channel, PDCCH) of the scheduling cell based on the search space set, to obtain the downlink control information (downlink control information, DCI) of the scheduling cell and the DCI of the scheduled cell, so as to demodulate data of the scheduling cell and data of the scheduled cell respectively.

US 2011/205978 A1 describes a method in a wireless communication terminal including monitoring a terminal specific search space of a first Component Carrier (CC) from a base unit, wherein the search space corresponds to a set of Physical Downlink Control Channel (PDCCH) candidates monitored by the terminal for PDCCH messages, and receiving an activation message on the first CC, wherein the activation message activates at least one additional CC. The size of the search space monitored by the terminal after receiving the activation message is greater than the size of the search space monitored before receiving the activation message.

US 2015/223265 A1 describes a system and method for using carrier aggregation and enhanced inter-cell interference coordination in carrier scheduling. The method comprises scheduling a communication of control channel information from at least one low power node on a physical downlink control channel (PDCCH) over at least one of a first low power component carrier and a second low power component carrier. A sub-frame having a lowest level of interference caused by a corresponding macro component carrier is identified at each corresponding subframe of the component carriers. The identified sub-frame is selected to transmit the control channel information on the PDCCH from the at least one low power node to a mobile wireless device.

EP 3 139 684 A1 describes a terminal device capable of efficiently performing communication in a communication system in which the terminal device and a base station device communicate with each other. The terminal device that communicates with the base station device by using a plurality of aggregated cells includes a reception unit that monitors a first CSS and/or USS in a certain serving cell, and monitors a second CSS and/or USS in the certain serving cell. The reception unit monitors the first CSS and USS in a case where the certain serving cell is a primary cell, and monitors the second CSS and USS in a case where the certain serving cell is a secondary cell and has at least one function of the primary cell.

### SUMMARY

Embodiments of this application provide a communication method and apparatus, to improve monitoring efficiency and scheduling efficiency. The invention is defined and limited by the appended independent claims. Further embodiments are defined by the appended dependent claims.

### BRIEF DESCRIPTION OF DRAWINGS

FIG. 1 is a schematic diagram of an architecture of a communication system according to an embodiment of this application;
FIG. 2 is a schematic diagram 1 of an SCG in a CA scenario according to an embodiment of this application;
FIG. 3 is a schematic diagram 2 of an SCG in a CA scenario according to an embodiment of this application;
FIG. 4 is a schematic flowchart of a communication method according to an embodiment of this application;
FIG. 5 is a schematic diagram 1 of a scenario of a pattern combination solution according to an embodiment of this application;
FIG. 6 is a schematic diagram 2 of a scenario in which a plurality of monitoring span patterns in one slot are combined according to an embodiment of this application;
FIG. 7 is a schematic diagram 3 of a scenario in which a plurality of monitoring span patterns in one slot are combined according to an embodiment of this application;
FIG. 8 is a schematic diagram 4 of a scenario in which a plurality of monitoring span patterns in one slot are combined according to an embodiment of this application;
FIG. 9 is a schematic diagram 5 of a scenario in which a plurality of monitoring span patterns in one slot are combined according to an embodiment of this application;
FIG. 10 is a schematic diagram of a scenario in which a pattern obtained through combination is an invalid configuration according to an embodiment of this application;
FIG. 11 is a schematic diagram 1 of a structure of a communication apparatus according to an embodiment of this application; and
FIG. 12 is a schematic diagram 2 of a structure of a communication apparatus according to an embodiment of this application.

### DESCRIPTION OF EMBODIMENTS

The following describes the technical solutions in this application with reference to the accompanying drawings.

The technical solutions in embodiments of this application may be applied to various communication systems, for example, a 4th generation (4th generation, 4G) mobile communication system, such as a long term evolution (long term evolution, LTE) system, a worldwide interoperability for microwave access (worldwide interoperability for microwave access, WiMAX) communication system, a new radio (new radio, NR) system of a 5th generation (5th generation, 5G) mobile communication system, and a future communication system, for example, a 6th generation (6th generation, 6G) mobile communication system.

All aspects, embodiments, or features are presented in this application by describing a system that may include a plurality of devices, components, modules, and the like. It should be understood that systems may include another device, component, or module. In addition, a combination of these solutions may be used.

In addition, in embodiments of this application, the terms such as "example" and "for example" are used for representing giving an example, an illustration, or a description. Any embodiment or design scheme described as an "example" in this application should not be explained as being more preferred or having more advantages than another embodiment or design scheme. Exactly, the term "example" is used for presenting a concept in a specific manner.

In embodiments of this application, "of (of)", "corresponding (corresponding, related)", and "corresponding (corresponding)" may be interchangeably used sometimes. It should be noted that meanings expressed by the terms are consistent when differences are not emphasized.

In embodiments of this application, sometimes a subscript such as W₁ may be written in an incorrect form such as W1. Expressed meanings are consistent when differences between them are not emphasized.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to similar technical problems.

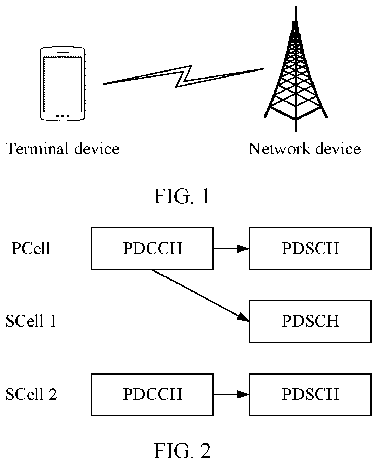

Some scenarios in embodiments of this application are described by using a scenario in a communication system shown in FIG. 1 as an example. It should be noted that the solutions in embodiments of this application may also be used in another mobile communication system, and a corresponding name may also be replaced with a name of a corresponding function in the another mobile communication system.

For ease of understanding embodiments of this application, a communication system shown in FIG. 1 is used as an example to describe in detail a communication system to which embodiments of this application are applicable. FIG. 1 is a schematic diagram of an architecture of a communication system to which a communication method according to an embodiment of this application is applicable. As shown in FIG. 1, the communication system includes a network device and a terminal device.

In a possible design, the terminal device is configured to perform the following step: receiving first configuration information. The first configuration information includes first indication information and second indication information, the first indication information indicates a search space configuration of a scheduling cell, and the second indication information indicates a search space configuration of at least one scheduled cell corresponding to the scheduling cell. Then, the terminal device determines a first monitoring span pattern based on the search space configuration of the scheduling cell and the search space configuration of the scheduled cell. The first monitoring span pattern includes N monitoring spans in a first time unit, and N is a positive integer. Then, the terminal device monitors a first downlink control channel based on the first monitoring span pattern. The first downlink control channel carries downlink control information of the scheduling cell or downlink control information of the scheduled cell corresponding to the scheduling cell.

Correspondingly, the network device is configured to perform the following step: sending the first configuration information to the terminal device. The first configuration information includes the first indication information and the second indication information, the first indication information indicates the search space configuration of the scheduling cell, and the second indication information indicates the search space configuration of the scheduled cell corresponding to the scheduling cell. Then, the network device determines the first monitoring span pattern based on the search space configuration of the scheduling cell and the search space configuration of the scheduled cell. The first monitoring span pattern includes the N monitoring spans in the first time unit, and N is a positive integer. Then, the network device sends the first downlink control channel based on the first monitoring span pattern. The first downlink control channel carries the downlink control information of the scheduling cell or the downlink control information of the scheduled cell corresponding to the scheduling cell.

The network device is located on a network side of the communication system. The terminal device is connected to a radio access network device in a wireless manner, to access a mobile communication system. The network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like; or the network device may be a module or a unit that implements a part of functions of a base station, for example, may be a central unit (central unit, CU), or a distributed unit (distributed unit, DU). A specific technology and a specific device form that are used by the network device are not limited in embodiments of this application.

The terminal device may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in embodiments of this application. It should be noted that the communication method provided in this embodiment of this application may be applied between any two nodes shown in FIG. 1, for example, between terminal devices, between network devices, or between a terminal device and a network device. For communication between terminal devices, if there is a network device, it is a scenario with network coverage. If there is no network device, it is a scenario without network coverage. In the scenario with network coverage, communication between terminal devices may be performed by using a resource configured by the network device. In the scenario without network coverage, communication between terminal devices may be performed by using a preconfigured resource.

It should be understood that FIG. 1 is a simplified schematic diagram of an example for case of understanding. The communication system may further include another network device and/or another terminal device that are/is not shown in FIG. 1.

The following uses the 5G mobile communication system as an example to describe related terms in the technical solutions in this application.

### 1. Monitoring span

An ultra reliable and low latency communication (ultra reliable low latency communication, URLLC) service is defined in the 5G communication system. To meet a latency requirement of the URLLC service, a monitoring span (monitoring span) is introduced into the 5G communication system, and the monitoring span may also be referred to as a span (span) for short. For ease of description, the monitoring span is referred to as a span in embodiments of this application.

A length of each monitoring span is at least Y consecutive symbols, and Y is an integer greater than 0. The Y consecutive symbols are consecutive in time domain (there is no interval with more than one symbol). Currently, the monitoring span is restricted by the following rules:
1. An overlapping symbol cannot exist between monitoring spans, to be specific, one symbol cannot belong to two monitoring spans at the same time.
2. Each monitoring span is included in one separate slot, to be specific, the monitoring span cannot cross a boundary of the slot.
3. Each PDCCH monitoring occasion (monitoring occasion, MO) is completely included in one monitoring span, to be specific, one MO cannot cross a boundary of the monitoring span. The MO herein indicates duration in which one terminal device blindly detects a PDCCH, and is determined based on both one monitoring start position and a control resource set (control resource set, CORESET) that is bound to a monitored search space set. For example, a monitoring start position at which the terminal device monitors one search space set is a first symbol in one slot, and the search space set is bound to one CORESET with a length of three symbols. Therefore, an MO for monitoring the search space set is the first three symbols, namely, a first symbol, a second symbol, and a third symbol, in a slot in which the MO is located.
4. For all PDCCH MOs in one slot, a number of different start symbols of a monitoring span cannot exceed floor(14/X), where X is a minimum value of a symbol interval between two adjacent monitoring spans that is supported by the terminal device. floor() indicates an operation of rounding down to a nearest integer.

For example, division of a monitoring span in one slot may be preset in a protocol, configured by the base station by using a higher-layer parameter, or determined by the terminal device according to a preset rule in a protocol and based on a higher-layer parameter. One monitoring span includes several symbols, and lengths of all monitoring spans in one slot may be the same or different. For example, lengths of some monitoring spans in one slot include seven symbols, and lengths of some monitoring spans include one or two symbols.

In view of this, embodiments of this application mainly study how to determine a monitoring capability corresponding to a monitoring span in a carrier aggregation (carrier aggregation, CA) scenario after the monitoring span is introduced, so that the terminal device monitors a PDCCH in the monitoring span.

For example, the first time unit described in embodiments of this application may be one or more slots. The first time unit may be a time granularity smaller than a length of a slot, for example, may be a time unit including several consecutive symbols, half slots, or sub-slots (sub-slots).

### 2. PCC, SCC, PCell, and SCell

A serving cell group (serving cell group, SCG, which may also be referred to as a serving cell set, serving cell set) configured by the network device for the terminal device includes a PCell and an SCell. The PCell is a cell operating on a primary component carrier. The terminal device may select a primary cell in an initial connection establishment process or a connection re-establishment process of the primary cell, or may select a target cell as a primary cell in a handover (handover) process. A carrier corresponding to the PCell is referred to as a PCC. A downlink (downlink, DL) carrier of the PCell is referred to as a DL PCC, and an uplink (uplink, UL) carrier of the PCell is referred to as a UL PCC. The SCell is a cell operating on a secondary component carrier. Once an RRC connection is established, a secondary cell may be configured to provide additional radio resources. If CA is not configured for a terminal device in an RRC connected mode, the terminal device has only one serving cell, namely, the PCell. If CA is configured, the serving cell group includes the PCell and the SCell. A carrier corresponding to the SCell is referred to as a secondary component carrier SCC. A downlink carrier of the SCell is referred to as a DL SCC, and an uplink carrier of the SCell is referred to as a UL SCC.

It should be noted that the PCell is usually a self-scheduling cell, and the SCell may be a self-scheduling cell, or may be a scheduled cell scheduled by the PCell. The PCell may also be referred to as a scheduling cell relative to the scheduled SCell. For example, FIG. 2 is a schematic diagram 1 of an SCG in a CA scenario according to an embodiment of this application. As shown in FIG. 2, a PCell is a scheduling cell, and both an SCell 1 and an SCell 2 are secondary cells. The SCell 1 is a scheduled cell, to be specific, a physical downlink shared channel (physical downlink shared channel, PDSCH) in the SCell 1 is scheduled by a PDCCH in the PCell, but the SCell 2 is a self-scheduling cell, to be specific, a PDSCH in the SCell 2 is scheduled by a PDCCH in the SCell 2. It is easy to understand that, if an SCell is scheduled by another cell, no downlink control channel needs to be configured for the SCell, because downlink control information corresponding to the SCell is carried on a downlink control channel of a scheduling cell that schedules the SCell. In addition, there is no RRC connection between the scheduled SCell and a terminal device. Therefore, after an initial security activation procedure is performed, one or more scheduled cells may be added/modified/released by using an RRC connection reconfiguration message between the scheduling cell and the terminal device.

In addition, in the CA scenario, a plurality of serving cells (serving cells) are configured, and one cell corresponds to one component carrier (component carrier, CC). Different CCs may be used for providing different coverage.

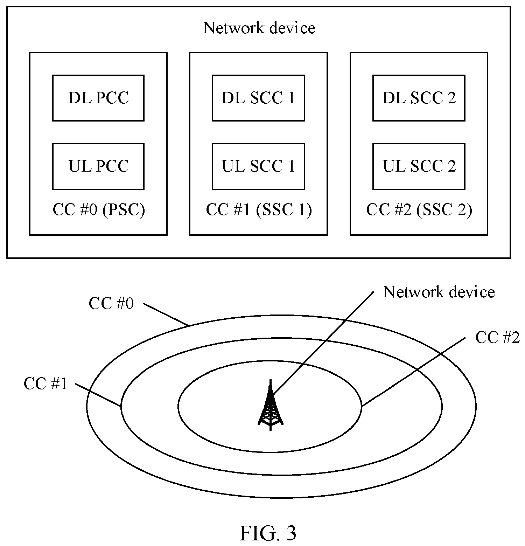

For example, FIG. 3 is a schematic diagram 2 of an SCG in a CA scenario according to an embodiment of this application. As shown in FIG. 3, a primary serving cell (primary serving cell, PSC) corresponds to a CC #0, and the CC #0 includes one DL PCC and one UL PCC. A network device establishes an RRC connection to a terminal device, and sends a configuration related to a secondary cell to the terminal device in an RRC connected mode by using higher-layer signaling (for example, RRC signaling). The terminal device obtains the configuration of the secondary cell by using the RRC signaling. A CC #1 is a secondary serving cell, and includes one DL SCC and one UL PCC. A CC #2 is a secondary serving cell, and includes one DL PCC and one UL PCC. The CC #2 has smallest coverage, the CC #1 has second smallest coverage, and the CC #0 has largest coverage. RRC communication exists only between the primary serving cell and the terminal device. The primary serving cell may also be referred to as a primary cell. Similarly, a secondary serving cell (secondary serving cell, SSC) may also be referred to as a secondary cell.

### 3. Search space set

The network device configures a search space (search space, SS) set in time domain of a PCell, for example, in one slot. The SS set may be used for scheduling the PCell or an SCell, or scheduling both the PCell and the SCell. If a cell is configured as a secondary cell by using RRC, a search space configuration of a PDCCH in the secondary cell includes a search space set index and an nrofCandidates information element. Content of the nrofCandidates information element includes an aggregation level corresponding to the search space set and a number of corresponding PDCCH candidates (PDCCH candidates). When an index of an SS set configured in the PCell is the same as an index of an SS set configured in an SCell, it indicates that a PDCCH for scheduling the SCell may be monitored in the SS set of the PCell.

To determine a specific CCE position of an SS set that can be used for scheduling the SCell and that is in the PCell, an aggregation level (aggregation level, AL) of the SS set configured in the SCell, a number of corresponding PDCCH candidates, and another related parameter need to be used. To determine a specific CCE position of an SS set that is used for scheduling the PCell and that is in the PCell, an aggregation level of the SS set configured in the PCell, a number of corresponding PDCCH candidates, and another related parameter need to be used. It can be learned that, when both configuration information of the PCell and configuration information of the SCell include an SS set with a same index, if numbers of PDCCH candidates corresponding to all ALs in configuration information of the SS set in the PCell are 0, it may be considered that the SS set is used for scheduling the SCell. If a number of PDCCH candidates corresponding to at least one AL in configuration information of the SS set in the PCell is not 0, it may be considered that the SS set is used for scheduling both the PCell and the SCell. If an index of an SS set configured in the PCell is not equal to indexes of all SS sets configured in the SCell, it may be considered that the SS set is used for scheduling the PCell.

For example, the network device configures one PCell and one SCell for one terminal device. The PCell is configured with three SS sets with the following indexes:

An SS #1: A number of PDCCH candidates corresponding to at least one configured AL is not 0. For example, a number of PDCCH candidates corresponding to an AL 1 is 4, and numbers of PDCCH candidates corresponding to an AL 2, an AL 4, an AL 8, and an AL 16 are 0. In this application, the AL 1 indicates that an aggregation level is 1, to be specific, a number of CCEs corresponding to a PDCCH candidate is 1; the AL 2 indicates that an aggregation level is 2, to be specific, a number of CCEs corresponding to a PDCCH candidate is 2; the AL 4 indicates that an aggregation level is 4, to be specific, a number of CCEs corresponding to a PDCCH candidate is 4; and so on.

An SS #2: Numbers of PDCCH candidates corresponding to all configured ALs are 0. For example, numbers of PDCCH candidates corresponding to the AL 1, the AL 2, the AL 4, the AL 8, and the AL 16 are 0.

An SS #3: A number of PDCCH candidates corresponding to at least one configured AL is not 0. For example, a number of PDCCH candidates corresponding to the AL 16 is 1, and numbers of PDCCH candidates corresponding to the AL 1, the AL 2, the AL 4, and the AL 8 are all 0.

The SCell is configured with two SS sets with the following indexes:
An SS #1: A number of PDCCH candidates corresponding to at least one configured AL is not 0. For example, a number of PDCCH candidates corresponding to an AL 1 is 2, a number of PDCCH candidates corresponding to an AL 2 is 1, and numbers of PDCCH candidates corresponding to an AL 4, an AL 8, and an AL 16 are 0.

An SS #2: A number of PDCCH candidates corresponding to at least one configured AL is not 0. For example, a number of PDCCH candidates corresponding to the AL 1 is 6, and numbers of PDCCH candidates corresponding to the AL 2, the AL 4, the AL 8, and the AL 16 are all 0.

Based on the foregoing configuration, the terminal device needs to monitor all configured SSs in the PCell. Details are as follows:
Because the SS #1 is configured in both the PCell and the SCell, and the number of PDCCH candidates corresponding to the at least one configured AL is not 0, the network device can not only schedule the PCell in the SS #1, and but also schedule the SCell in the SS #1. The terminal device needs to monitor, in the SS #1, both a PDCCH for scheduling the PCell and a PDCCH for scheduling the SCell.

The SS #2 is configured in both the PCell and the SCell. However, the numbers of PDCCH candidates corresponding to all configured ALs of the SS #2 in the PCell are 0, and the number of PDCCH candidates corresponding to at least one AL configured for the SS #2 in the SCell is not 0. Therefore, it may be understood that the SS #2 in the PCell is used for scheduling only the SCell, and the terminal device needs to monitor, in the SS #2 in the PCell, only the PDCCH for scheduling the SCell.

The SS#3 is configured only in the PCell, and the number of PDCCH candidates corresponding to at least one configured AL of the SS #3 in the PCell is not 0. Therefore, it may be understood that the SS #3 in the PCell is used for scheduling only the PCell, and the terminal device needs to monitor, in the SS #3 in the PCell, only the PDCCH for scheduling the PCell.

### 4. Symbol

In this application, unless otherwise specified, a symbol refers to a time-domain symbol. The time-domain symbol may be an orthogonal frequency division multiplexing (orthogonal frequency division multiplexing, OFDM) symbol, or may be a time-domain symbol of another waveform. This is not limited in this application.

It may be understood that, in this application, the PDCCH and the PDSCH are merely used as examples of a downlink control channel and a downlink data channel, and may have different names in different systems. This is not limited in this application.

In an existing solution, DCI of a single cell can be monitored only at a slot granularity, and a technical solution of monitoring DCI of a plurality of cells at a smaller time granularity is not provided. In other words, the terminal device can monitor the scheduling cell and the scheduled cell one by one only at the slot granularity. This results in low monitoring efficiency.

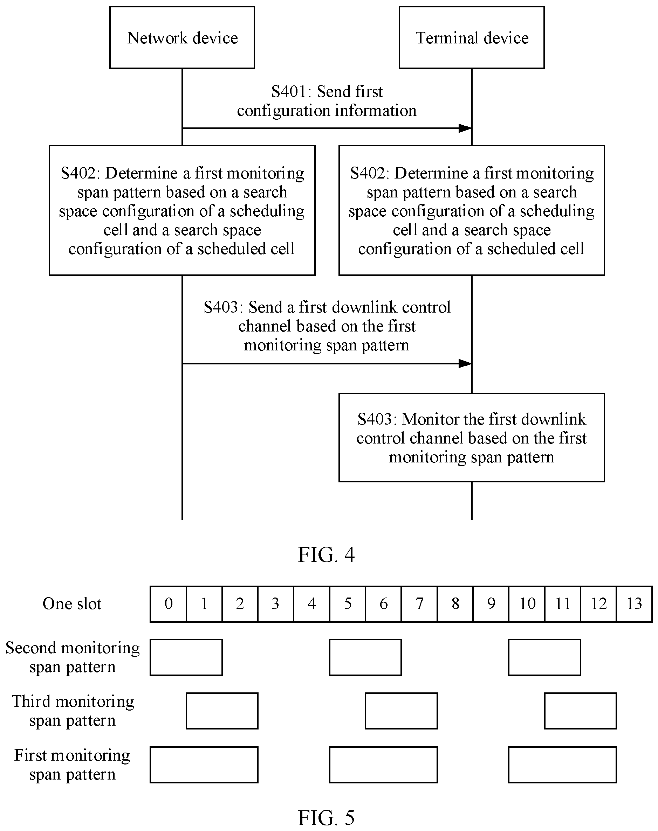

The following describes in detail a communication method provided in embodiments of this application with reference to FIG. 4 to FIG. 10.

FIG. 4 is a schematic flowchart 1 of a communication method according to an embodiment of this application. The communication method shown in FIG. 4 is applicable to communication between the terminal device and the network device in the communication system shown in FIG. 1. It may be understood that the communication method in this application may be performed by the terminal device and the network device, or may be performed by a module that may be used in the terminal device and the network device, for example, a chip. The following provides description by using an example in which the terminal device and the network device are used as execution bodies. As shown in FIG. 4, the communication method includes the following steps.

S401: The network device sends first configuration information to the terminal device. Correspondingly, the terminal device receives the first configuration information from the network device.

For example, the network device may send the first configuration information to the terminal device by using RRC signaling.

The first configuration information includes first indication information and second indication information, the first indication information indicates a search space configuration of a scheduling cell, and the second indication information indicates a search space configuration of at least one scheduled cell corresponding to the scheduling cell. Optionally, the first indication information may further indicate a CORESET configuration. S402: The network device determines a first monitoring span pattern based on the search space configuration of the scheduling cell and the search space configuration of the scheduled cell. Correspondingly, the terminal device may also determine the first monitoring span pattern based on the search space configuration of the scheduling cell and the search space configuration of the scheduled cell.

The first monitoring span pattern includes N monitoring spans in a first time unit, and N is a positive integer. In this application, the first time unit may be a slot, may be a subframe or a radio frame, or may be another time unit. This is not limited in this application.

In a possible design method, the determining a first monitoring span pattern based on the search space configuration of the scheduling cell and the search space configuration of the scheduled cell specifically includes: determining a second monitoring span pattern of the scheduling cell based on the search space configuration of the scheduling cell, where the second monitoring span pattern includes N1 monitoring spans in the first time unit, and N1 is a positive integer; determining a third monitoring span pattern of a first scheduled cell based on a search space configuration of the first scheduled cell, where the third monitoring span pattern includes N2 monitoring spans in the first time unit, N2 is a positive integer, and the first scheduled cell is one scheduled cell in the scheduled cell; and determining the N monitoring spans based on the N1 monitoring spans and the N2 monitoring spans.

Optionally, the determining the N monitoring spans based on the N1 monitoring spans and the N2 monitoring spans may specifically include: when a j^{th} monitoring span in the N1 monitoring spans and a k^{th} monitoring span in the N2 monitoring spans partially overlap, completely overlap, or are connected head-to-tail, determining that a t^{th} monitoring span in the N monitoring spans meets the following condition: An index of a start symbol of the t^{th} monitoring span is less than or equal to an index of a start symbol of the j^{th} monitoring span, and is less than or equal to an index of a start symbol of the k^{th} monitoring span; and an index of an end symbol of the t^{th} monitoring span is greater than or equal to an index of an end symbol of the j^{th} monitoring span, and is greater than or equal to an index of an end symbol of the k^{th} monitoring span. A number of consecutive time-domain symbols included in the t^{th} monitoring span is equal to a value of Y of at least one monitoring span pattern in a PDCCH monitoring capability report reported by the terminal device. j is a positive integer less than or equal to N1, k is a positive integer less than or equal to N2, and t is a positive integer less than or equal to N.

In a possible design method, the first configuration information is carried in an RRC connection reconfiguration message. Correspondingly, when a time length of the t^{th} monitoring span is greater than a maximum value of a monitoring span defined in a protocol, or when the first monitoring span pattern does not meet a monitoring capability reported by the terminal device to the network device, the terminal device may send an RRC connection reconfiguration failure message to the network device.

For example, FIG. 5 is a schematic diagram 1 of a scenario in which a plurality of monitoring span patterns in one slot are combined according to an embodiment of this application. As shown in FIG. 5, it is assumed that monitoring capabilities indicated by second capability reports separately reported by the terminal device in a scheduling cell CC 1 and a scheduled cell CC 2 are both (X, Y) = {(7,3), (4,3)}. In this case, it is determined, based on an SS set used for scheduling the scheduling cell CC 1 and information about an associated CORESET that are in the first configuration information, that a second monitoring span pattern corresponding to the scheduling cell CC 1 is a second monitoring span pattern shown in FIG. 5, a monitoring capability that can be met is (4, 3), and there are a total of three monitoring spans in one slot. Similarly, the terminal device determines, based on an SS set used for scheduling the scheduled cell CC 2 and information about an associated CORESET that are in the first configuration information, that a third monitoring span pattern corresponding to the scheduled cell CC 2 is a third monitoring span pattern shown in FIG. 5, a monitoring capability that can be met is also (4, 3), and there are a total of three monitoring spans in one slot. For a first monitoring span corresponding to the scheduling cell CC 1, an index of a start symbol is 0, and an index of an end symbol is 1. For a first monitoring span corresponding to the scheduled cell CC 2, an index of a start symbol is 1, and an index of an end symbol is 2. In other words, the first monitoring span corresponding to the scheduling cell CC 1 partially overlaps the first monitoring span corresponding to the scheduled cell CC 2, the index of the start symbol of the first monitoring span corresponding to the scheduling cell CC 1 is less than the index of the start symbol of the first monitoring span corresponding to the scheduled cell CC 2, and the index of the end symbol of the first monitoring span corresponding to the scheduling cell CC 1 is less than the index of the end symbol of the first monitoring span corresponding to the scheduled cell CC 2. Therefore, the first monitoring span corresponding to the scheduling cell CC 1 and the first monitoring span corresponding to the scheduled cell CC 2 may be combined into a first monitoring span in a first monitoring span pattern in the scheduling cell. Similarly, a second monitoring span corresponding to the scheduling cell CC 1 and a second monitoring span corresponding to the scheduled cell CC 2 may be combined into a second monitoring span in the first monitoring span pattern, and a third monitoring span corresponding to the scheduling cell CC 1 and a third monitoring span corresponding to the scheduled cell CC 2 may be combined into a third monitoring span in the first monitoring span pattern. After all monitoring spans are combined to obtain a new monitoring span, a monitoring span pattern (X, Y) in the scheduling cell is a first monitoring span pattern (5, 3) shown in FIG. 5, a monitoring capability that can be met is (4, 3), and there are a total of three monitoring spans in one slot.

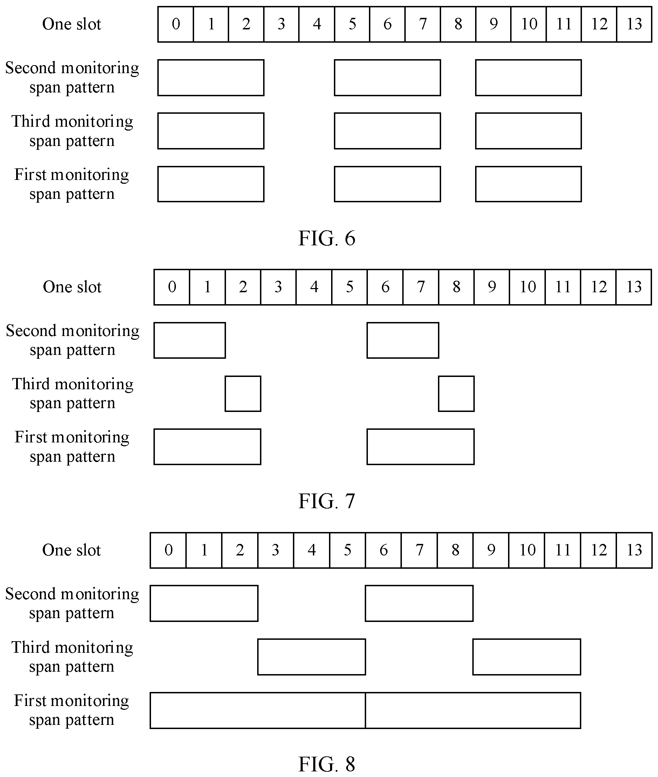

For example, FIG. 6 is a schematic diagram 2 of a scenario in which a plurality of monitoring span patterns in one slot are combined according to an embodiment of this application. As shown in FIG. 6, it is assumed that the terminal device separately reports second capability reports in the scheduling cell CC 1 and the scheduled cell CC 2, and the second capability reports are both (X, Y) = {(7,3), (4,3)}. As shown in FIG. 6, a second monitoring span pattern corresponding to the scheduling cell includes N1 monitoring spans, where N1 is equal to 3. A third monitoring span pattern corresponding to the scheduled cell includes N2 monitoring spans, where N2 is equal to 3. A monitoring span corresponding to the scheduling cell CC 1 and a monitoring span corresponding to the scheduled cell CC 2 that completely overlap in time domain may be combined into a monitoring span in a first monitoring span pattern in the scheduling cell. A first monitoring span pattern obtained through combination includes N monitoring spans, where N is equal to 3.

For example, FIG. 7 is a schematic diagram 3 of a scenario in which a plurality of monitoring span patterns in one slot are combined according to an embodiment of this application. As shown in FIG. 7, it is assumed that monitoring capabilities indicated by second capability reports separately reported by the terminal device in the scheduling cell CC 1 and the scheduled cell CC 2 are both (X, Y) = {(7,3), (4,3)}. As shown in FIG. 7, a second monitoring span pattern is (6, 2). To be specific, the second monitoring span pattern includes two monitoring spans, a symbol interval between the two monitoring spans includes six symbols, a length of each monitoring span includes two symbols, and a monitoring capability that can be met is (4, 3). {Indexes of start symbols, indexes of end symbols} of the two monitoring spans in the second monitoring span pattern are {0, 1} and {6, 7}. A third monitoring span pattern is (6, 1). To be specific, the third monitoring span pattern includes two monitoring spans, a symbol interval between the two monitoring spans includes six symbols, a length of each monitoring span includes one symbol, and a monitoring capability that can be met is (4, 3). {Indexes of start symbols, indexes of end symbols} of the two monitoring spans in the third monitoring span pattern are {2, 2} and {8, 8}. Although the second monitoring span pattern and the third monitoring span pattern do not overlap at all, an end symbol of a first monitoring span in the second monitoring span pattern is connected to a start symbol of a first monitoring span in the third monitoring span pattern head-to-tail. Therefore, the first monitoring span in the second monitoring span pattern and the first monitoring span in the third monitoring span pattern meet a combination condition, and may be combined into one monitoring span, to be specific, a first monitoring span {0, 2} in the first monitoring span pattern in FIG. 6. Similarly, a second monitoring span in the second monitoring span pattern and a second monitoring span in the third monitoring span pattern may also be combined into a second monitoring span {6, 8} in the first monitoring span pattern in FIG. 6. In conclusion, a first monitoring span pattern obtained through combination is (6, 3), and a monitoring capability that can be met is (4, 3). Therefore, a PDCCH monitoring capability corresponding to the monitoring span pattern (6, 3) is determined as a first monitoring capability.

It should be noted that the monitoring span pattern obtained through combination needs to meet the monitoring capability reported by the terminal device to the network device. For example, (X, Y) is one or more values in a set {(7,3), (4,3), (2,2)}. In other words, although two monitoring spans that meet a condition of head-to-tail connection in two monitoring span patterns may be combined into one new monitoring span, a monitoring span pattern formed by monitoring spans obtained through combination may not meet the monitoring capability reported by the terminal device to the network device. That the monitoring capability reported by the terminal device to the network device is not met means that a monitoring span pattern does not meet any monitoring capability defined in a set (X, Y). The set (X, Y) herein represents the monitoring capability reported by the terminal device to the network device. Further, that the monitoring capability reported by the terminal device to the network device is not met may be understood as that a symbol interval between two adjacent monitoring spans in a monitoring span pattern is less than any value of X in the set (X, Y), or a time length of a monitoring span in the monitoring span pattern is greater than a maximum value of Y in the set (X, Y). Alternatively, that the monitoring capability reported by the terminal device to the network device is not met may be understood as that a monitoring capability matching the monitoring span pattern cannot be found in the set (X, Y), so that the time length of the monitoring span is less than or equal to Y, and a minimum value of the symbol interval between the two adjacent monitoring spans is greater than or equal to X.

For example, FIG. 8 is a schematic diagram 4 of a scenario in which a plurality of monitoring span patterns in one slot are combined according to an embodiment of this application. As shown in FIG. 8, it is assumed that monitoring capabilities indicated by second capability reports separately reported by the terminal device in the scheduling cell CC 1 and the scheduled cell CC 2 are both (X, Y) = {(7,3), (4,3)}. As shown in FIG. 8, a second monitoring span pattern is (6, 3). To be specific, the second monitoring span pattern includes two monitoring spans, a symbol interval between the two monitoring spans includes six symbols, a length of each monitoring span includes three symbols, and a monitoring capability that can be met is (6, 3). {Indexes of start symbols, indexes of end symbols} of the two monitoring spans in the second monitoring span pattern are {0, 2} and {6, 8}. A third monitoring span pattern is (6, 3). To be specific, the third monitoring span pattern includes two monitoring spans, a symbol interval between the two monitoring spans includes six symbols, a length of each monitoring span includes three symbols, and a monitoring capability that can be met is (6, 3). {Indexes of start symbols, indexes of end symbols} of the two monitoring spans in the third monitoring span pattern are {3, 5} and {9, 11}. Although the second monitoring span pattern and the third monitoring span pattern do not overlap at all, an end symbol (a symbol 2) of a first monitoring span in the second monitoring span pattern is connected to a start symbol (a symbol 3) of a first monitoring span in the third monitoring span pattern head-to-tail. If the first monitoring span in the second monitoring span pattern and the first monitoring span in the third monitoring span pattern are combined into one monitoring span {0, 5}, and a second monitoring span in the second monitoring span pattern and a second monitoring span in the third monitoring span pattern are combined into one monitoring span {6, 11}, a first monitoring span pattern obtained through combination is (6, 6), and the first monitoring span pattern cannot meet monitoring capabilities (4, 3) and (7, 3). Therefore, the second monitoring span pattern and the third monitoring span pattern in this scenario cannot be combined by using this method.

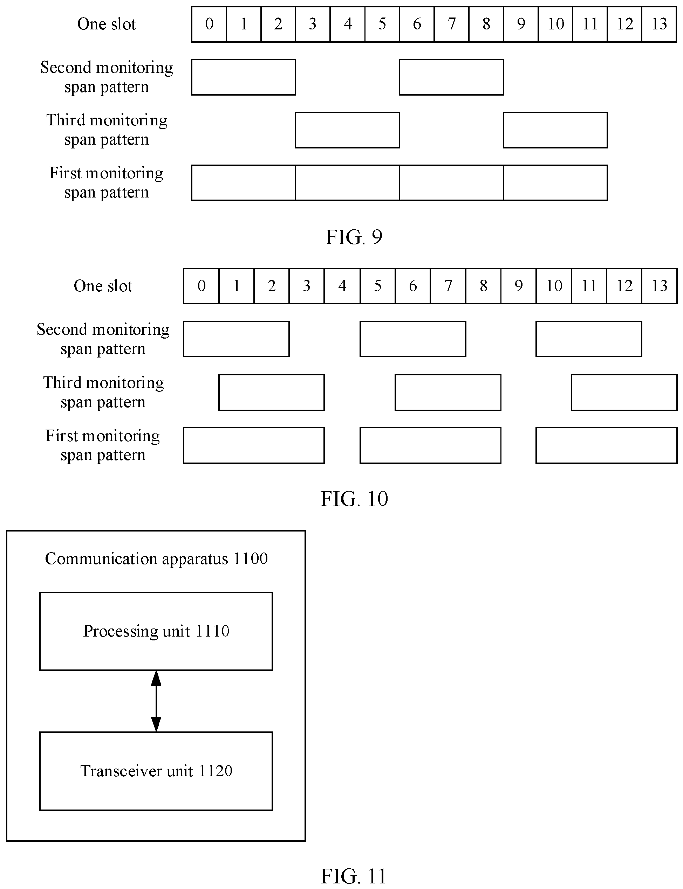

In this case, two head-to-tail connected monitoring span patterns may be fused into one monitoring span pattern, and each of the two monitoring span patterns is used as an independent monitoring span in a monitoring span pattern obtained through combination. As shown in FIG. 9, the first monitoring span pattern includes four monitoring spans in total, and {indexes of start symbols, indexes of end symbols} of a first monitoring span to a fourth monitoring span are sequentially {0, 2}, {3, 5}, {6, 8}, and {9, 11}. To be specific, a first monitoring span pattern obtained through combination is (3, 3). Therefore, a PDCCH monitoring capability corresponding to the monitoring span pattern (3, 3) is determined as the first monitoring capability.

In another possible design method, the determining a first monitoring span pattern based on the search space configuration of the scheduling cell and the search space configuration of the scheduled cell specifically includes: determining the first monitoring span pattern of the scheduling cell based on the search space configuration of the scheduling cell and the CORESET configuration. Each monitoring span in the first monitoring span pattern may be used for monitoring the scheduling cell or the scheduled cell.

After a position of each monitoring span in the first monitoring span pattern is determined, an actual monitoring capability may be determined for each monitoring span in the first monitoring span pattern. For details, refer to the following related content in S403.

S403: The network device sends a first downlink control channel to the terminal device based on the first monitoring span pattern. Correspondingly, the terminal device monitors the first downlink control channel based on the first monitoring span pattern.

The first downlink control channel carries downlink control information of the scheduling cell or downlink control information of the scheduled cell corresponding to the scheduling cell.

In a possible design method, that the network device sends a first downlink control channel to the terminal device based on the first monitoring span pattern in S403 may include: The network device determines the first monitoring capability based on the search space configuration of the scheduling cell, the search space configuration of the scheduled cell, and information about a capability supported by the terminal device, or based on information about a capability supported by the terminal device. The first monitoring capability includes a monitoring capability of monitoring the first downlink control channel by the terminal device in each of the N monitoring spans. Further, the network device sends the first downlink control channel based on the first monitoring capability.

Correspondingly, that the terminal device monitors the first downlink control channel based on the first monitoring span pattern may include: The terminal device determines the first monitoring capability based on the search space configuration of the scheduling cell, the search space configuration of the scheduled cell, and the information about the capability supported by the terminal device, or based on the information about the capability supported by the terminal device. Further, the terminal device monitors the first downlink control channel based on the first monitoring capability.

For example, the information about the capability supported by the terminal device may include one or more of the following: information about a capability indicated by a first capability report and information about a capability indicated by the second capability report. The first capability report is used for indicating the information about the capability supported by the terminal device, and the first capability report includes a mapping relationship between a reference number of cells for downlink control channel blind detection (reference number of cells for downlink control channel blind detection) and the monitoring capability of the terminal device in each of the N monitoring spans. The second capability report is used for indicating the information about the capability supported by the terminal device, and the second capability report includes a monitoring capability of monitoring a downlink control channel of one cell by the terminal device in each of the N monitoring spans. In this application, the terms "cell" and "carrier" are not strictly distinguished, and may be interchanged. The reference number of cells for downlink control channel blind detection may also be referred to as a reference number of carriers for downlink control channel blind detection.

In this embodiment of this application, the information about the capability supported by the terminal device is a capability of performing blind detection on a PDCCH by the terminal device, or a capability of monitoring a PDCCH by the terminal device. It should be noted that because complexity of PDCCH detection is high, power consumption of the terminal device is high. Therefore, in a 5G communication system, a PDCCH monitoring capability corresponding to one slot or one span may be set, or may be referred to as a PDCCH blind detection capability corresponding to one slot or one span. A monitoring capability of monitoring a downlink control channel in one slot or one span may include: (1) a maximum number of monitoring times of monitoring the PDCCH by the terminal device in one slot or one span, and/or (2) a maximum number of CCEs used by the terminal device to perform channel estimation in one slot or one span. In (1), the number of monitoring times is a number of monitored PDCCH candidates. For example, if a number of PDCCH candidates configured for an aggregation level 2 is 3, and one PDCCH format needs to be detected for each PDCCH candidate, a number of monitoring times at the aggregation level 2 is 3 * 1 = 3. For example, the maximum number of monitoring times of monitoring the PDCCH in one slot or one span may be a maximum number of monitoring times that the terminal device can bear in one slot or one span. In (2), DCI may be affected by a radio channel environment in a transmission process, and this greatly affects transmission performance. Therefore, before monitoring, the terminal device needs to perform channel estimation on a pilot inserted in the PDCCH, to counteract impact of a radio channel on signal transmission, and restore a transmitted signal of the network device as accurately as possible. Because a PDCCH resource is allocated in a minimum unit of CCE, the terminal device also performs channel estimation in the unit of CCE. For example, the maximum number of CCEs used by the terminal device to perform channel estimation in one slot or one span is a maximum number of CCEs that can be used by the terminal device to perform channel estimation in one slot or one span.

The first capability report indicates, for a monitoring span pattern, a mapping relationship between a reference number of cells for PDCCH blind detection and a monitoring capability in each monitoring span in the monitoring span pattern. Specifically, the monitoring capability includes an upper limit of a number of blind detection times and/or an upper limit of a number of non-overlapping CCEs used for channel estimation. In this application, the upper limit of the number of non-overlapping CCEs used for channel estimation is referred to as a CCE upper limit for short. The reference number of cells for PDCCH blind detection is a reference parameter reported by the terminal device, and the network device needs to refer to the reporting capability value when configuring the PDCCH for the terminal device. The reference cell may be used for calculating a total blind detection capability in a multi-cell or multi-carrier scenario. Specifically, it is assumed that in the multi-cell or multi-carrier scenario, a total number of blind detection times and a number of configured cells or a number of activated cells are in a linear increasing relationship. To be specific, the total number of blind detection times is equal to a sum of the number of configured cells or the number of activated cells and a product of a number of blind detection times corresponding to one cell or a number of blind detection times corresponding to one carrier. For example, it is assumed that the number of blind detection times corresponding to one cell or one carrier is 44, the terminal device sends a PDCCH capability report to the network device, to notify that a blind detection capability or a PDCCH monitoring capability supports four cells or four activated cells. When configuring a PDCCH candidate for the terminal device, the network device refers to the PDCCH capability report sent by the terminal device, that is, 4 * 44 blind detection times. Therefore, a number of blind detection times corresponding to a PDCCH candidate that actually configured by the network device may be equal to 4 * 44, or may be less than 4 *44, for example, equal to 2 * 44. The network device ensures that the number of blind detection times corresponding to the configured PDCCH candidate does not exceed the upper limit of the number of PDCCH blind detection times corresponding to the PDCCH capability report sent by the terminal device. A description about the number of non-overlapping CCEs used for channel estimation is similar, and details are not described herein again.

It should be noted that the terminal device reports that three cells are supported for a span pattern (2, 2). When configuring the PDCCH for the terminal device, the network device may configure the PDCCH based on an upper limit of a number of blind detection times corresponding to three cells, or may configure the PDCCH based on an upper limit of a number of blind detection times corresponding to fewer than three cells. It should be noted that the reference number of cells for PDCCH blind detection does not affect a number of cells configured by the network device for the terminal device. In other words, the number of cells configured by the network device may be greater than the reference number of cells for PDCCH blind detection. For example, the terminal device reports that a reference number of cells for PDCCH blind detection for the span pattern (2, 2) is 3, but the network device may configure four cells for the terminal device.

For example, Table 1 to Table 3 show three examples of the information about the capability indicated by the first capability report. Table 1 shows a mapping relationship between a reference number of cells for PDCCH blind detection in a CA scenario and an upper limit of a number of CCEs corresponding to one monitoring span in different monitoring span patterns. As shown in Table 1, it is assumed that a monitoring span pattern (X, Y) corresponding to the scheduling cell is (2, 2). If the reference number of cells for PDCCH blind detection is 3, an upper limit of a number of non-overlapping CCEs used for channel estimation that corresponds to the monitoring span pattern (2, 2) corresponding to the scheduling cell is 56.

Table 2 shows a mapping relationship between a reference number of cells for PDCCH blind detection in a CA scenario and an upper limit of a number of BD times corresponding to one monitoring span in different monitoring span patterns. As shown in Table 2, it is assumed that a monitoring span pattern (X, Y) corresponding to the scheduling cell is (2, 2). If the reference number of cells for PDCCH blind detection is 3, an upper limit of a number of blind detection times that corresponds to the monitoring span pattern (2, 2) corresponding to the scheduling cell is 14.

Table 3 shows a mapping relationship between a reference number of cells for PDCCH blind detection in a CA scenario, an upper limit of a number of BD times corresponding to one monitoring span in different monitoring span patterns, and an upper limit of a number of non-overlapping CCEs used for channel estimation that corresponds to the monitoring span in different monitoring span patterns. In other words, specific content in Table 3 is a combination of specific content in Table 1 and Table 2. As shown in Table 3, it is assumed that a monitoring span pattern (X, Y) corresponding to the scheduling cell is (2, 2). If a reference number of cells for PDCCH blind detection is 3, an upper limit of a number of blind detection times that corresponds to the monitoring span pattern (2, 2) corresponding to the scheduling cell is 14, and an upper limit of a number of corresponding non-overlapping CCEs used for channel estimation is 56.

It should be noted that Table 1 to Table 3 provide upper limits of a number of BD times and/or upper limits of a number of CCEs in scenarios in which reference numbers of cells for PDCCH blind detection is 2 and 3. It is easy to understand that in a scenario in which a reference number of cells for PDCCH blind detection is greater than 3, for example, 4, a corresponding upper limit of a number of BD times and/or upper limit of a number of CCEs may also be determined according to the method provided in this embodiment of this application. Details are not described again in embodiments of this application.

**Table 1**

| Reference number of cells for PDCCH blind detection | Monitoring span pattern (X, Y) | | |
|---|---|---|---|
| | (2, 2) | (4, 3) | (7, 3) |
| 2 | 42 | 54 | 84 |
| 3 | 56 | 72 | 112 |

**Table 2**

| Reference number of cells | Monitoring span pattern (X, Y) | | |
|---|---|---|---|
| for PDCCH blind detection | (2, 2) | (4, 3) | (7, 3) |
| 2 | 10 | 22 | 32 |
| 3 | 14 | 30 | 44 |

**Table 3**

| Reference number of cells for PDCCH blind detection | Monitoring span pattern (X, Y) | | |
|---|---|---|---|
| | (2, 2) | (4, 3) | (7, 3) |
| 2 | 10/42 | 22/54 | 32/84 |
| 3 | 14/56 | 30/72 | 44/112 |

For example, Table 4 is an example of the information of the capability indicated by the second capability report. The second capability report includes a capability of monitoring a downlink control channel of one cell by the terminal device in one monitoring span. The monitoring span herein may be equal to or less than one slot. Table 4 shows a mapping relationship between a monitoring span pattern and a monitoring capability of monitoring a PDCCH of one cell in one monitoring span in the monitoring span pattern. Specifically, the monitoring capability herein is a corresponding upper limit of a number of CCEs. The one cell herein may be one cell in a single-carrier scenario, or may be a primary component carrier cell or a secondary component carrier cell in the CA scenario. As shown in Table 4, it is assumed that a monitoring span pattern (X, Y) corresponding to the scheduling cell is (2, 2), and a subcarrier spacing is 15 kHz. In this case, it may be determined that an upper limit of a number of CCEs corresponding to each monitoring span pattern is 28.

**Table 4**

| | (X, Y) | Monitoring capability | |
|---|---|---|---|
| | | 15 kHz subcarrier spacing | 30 kHz subcarrier spacing |
| Monitoring span pattern 1 | (2, 2) | 28 | 28 |
| Monitoring span pattern 2 | (4, 3) | 36 | 36 |
| Monitoring span pattern 3 | (7,3) | 56 | 56 |

In a possible design method, the first monitoring capability may be a monitoring capability indicated by the first capability report.

For example, for the terminal device, the determining the first monitoring capability based on the information about the capability supported by the terminal device may specifically include: The terminal device determines a reference number of cells for downlink control channel blind channel detection in each monitoring span in the first monitoring span pattern, and queries, based on the reference number, the mapping relationship locally cached, for example, a mapping relationship table, to determine the first monitoring capability. The first monitoring capability is the monitoring capability of the terminal device in each of the N monitoring spans. In other words, the monitoring capability indicated by the first capability report is determined as the first monitoring capability.

For example, for the network device, the determining the first monitoring capability based on the information about the capability supported by the terminal device specifically includes: The network device receives the first capability report from the terminal device. Then, the network device determines the reference number of cells for downlink control channel blind channel detection in each monitoring span in the first monitoring span pattern, and determines the first monitoring capability based on the reference number and the foregoing mapping relationship. The first monitoring capability is the monitoring capability of the terminal device in each of the N monitoring spans. In other words, the monitoring capability indicated by the first capability report is determined as the first monitoring capability.

In another possible design, the network device and the terminal device may alternatively determine the first monitoring capability based on the second capability report. The second capability report indicates a monitoring capability of monitoring a downlink control channel of one cell by the terminal device in each monitoring span. It is assumed that the monitoring capability is C1. Specifically, after a number of carriers that need to be monitored in each monitoring span in the first monitoring span pattern is determined, the first monitoring capability may be determined in any one of the following manners.

Manner 1: The first monitoring capability may be r * C1. r is a positive real number greater than 1.

For example, it is assumed that the terminal device determines, based on configuration information of the scheduling cell, that the monitoring span pattern (X, Y) of the scheduling cell is (2, 2). It can be learned based on the second capability report that, for a single CC, a monitoring capability upper limit C1 corresponding to each monitoring span is 28. If the terminal device determines, based on the first configuration information, that three cells are configured or activated, where one cell is a scheduling cell, and two cells are scheduled cells, the terminal device may further determine that a monitoring capability upper limit corresponding to each monitoring span in the scheduling cell is r * C1, where r is a positive real number greater than 1. For example, r = 3. r may alternatively be a value related to the scheduling cell and the scheduled cell. For example, for the scheduling cell, r = 1, and for the scheduled cell, r = 0.5. The terminal device may determine that the monitoring capability corresponding to each monitoring span in the scheduling cell is 1 * C1 + 2 * 0.5 * C1, to be specific, the monitoring capability corresponding to each monitoring span is 56.

Manner 2: The first monitoring capability includes a monitoring capability C(i) in an i^{th} monitoring span in the N monitoring spans, where i is a positive integer less than or equal to N. C(i) = r1 * C1 + M(i) * r2 * C1. M(i) is a number of scheduled cells that correspond to the scheduling cell and that are configured in the i^{th} monitoring span, and r1 and r2 are real numbers less than or equal to 1 and greater than 0. In some special cases, r2 may alternatively be equal to 0.

Manner 3: The first monitoring capability includes a monitoring capability C(i) in an i^{th} monitoring span in the N monitoring spans, where i is a positive integer less than or equal to N. When no search space of the scheduling cell is configured in the i^{th} monitoring span, C(i) = M(i) * r2 * C1. When only a search space of the scheduling cell is configured in the i^{th} monitoring span, C(i) = r1 * C1. When both a search space of the scheduling cell and a search space of the scheduled cell are configured in the i^{th} monitoring span, C(i) = C1 + M(i) * r2 * C1. M(i) is a number of scheduled cells that correspond to the scheduling cell and that are configured in the i^{th} monitoring span, and r2 is a real number less than or equal to 1 and greater than 0.

For example, it is assumed that the terminal device determines, based on a first configuration information, that there are three monitoring spans in one slot of the scheduling cell, a corresponding monitoring span pattern (X, Y) is (4, 3), and a monitoring capability upper limit C1 corresponding to each monitoring span on a single CC is 36. When both a search space set for scheduling the scheduling cell and search space sets for scheduling the two scheduled cells are configured in a first monitoring span, it is assumed that r1 is equal to 1 and r2 is equal to 0.5, a monitoring capability upper limit corresponding to the first monitoring span is C(1) = r1 * C1 + M(1) * r2 * C1 = 1 * 48 + 2 * 0.5 * 48, that is, 96. Similarly, when only a search space set for scheduling the scheduling cell is configured in a second monitoring span, a monitoring capability upper limit corresponding to the second monitoring span is 0 * 48 + 1 * 0.5 * 48, that is, 24. Similarly, when a search space set for scheduling the scheduling cell and a search space set for scheduling one scheduled cell are configured in a third monitoring span, a monitoring capability upper limit corresponding to the third monitoring span is 1 * 48 + 0 * 0.5 * 48, that is, 48. Then, the terminal device may monitor a PDCCH in each monitoring span based on a corresponding monitoring capability upper limit. In this application, that a search space set is configured may also be understood as that a PDCCH monitoring occasion is configured.

Further, a maximum value max{C(i)} in monitoring capabilities corresponding to all monitoring spans that is obtained in the manner 2 or manner 3 may be used as the first monitoring capability. Therefore, for the manner 2 and manner 3, max{C(i)} = max{96, 48, 24} = 96 may be determined as the first monitoring capability. It should be noted that once 96 is determined as the first monitoring capability, it may be determined that monitoring capability upper limits corresponding to all the monitoring spans are 96. A maximum value in monitoring capabilities of all monitoring spans in a monitoring span pattern is used as a monitoring capability in each monitoring span in the monitoring span pattern. This can avoid that different monitoring spans in one monitoring span pattern has different monitoring capability values. Therefore, the manner 2 may be further improved into a manner 4, and the manner 3 may be further improved into a manner 5. Descriptions are separately provided below.

Manner 4: The first monitoring capability may be max{C(i)}. C(i) is a monitoring capability in an i^{th} monitoring span in the N monitoring spans. For a specific definition of C(i), refer to related descriptions in the manner 2.

Manner 5: The first monitoring capability may be max{C(i)}. C(i) is a monitoring capability in an i^{th} monitoring span in the N monitoring spans. For a specific definition of C(i), refer to related descriptions in the manner 3.

It should be noted that in each monitoring span, it is configured that a scale factor r1 corresponding to the scheduling cell and/or a scale factor r2 corresponding to the scheduled cell may change with an index of a monitoring span, that is, r1(i) and r2(i), where i is an index of a monitoring span in one slot, and a value ranges from 1 to N. Correspondingly, r1 in the manner 1 to manner 5 may be replaced with r1(i), and similarly, r2 may be replaced with r2(i). A specific formula may be obtained with reference to the manner 2 to manner 5. When a calculated value of the first monitoring capability in any one of the manner 2 to manner 5 is a decimal, a rounding operation may be performed on the decimal to obtain a final first monitoring capability. The rounding operation herein may be rounding up, rounding down, or rounding off.

For example, the manner 2 is used as an example. It is assumed that N = 7, r1(1) = 1, r1(2) = 0.9, r1(3) = 0.8, r1(4) = 0.7, r1(5) = 0.6, r1(6) = 0.5, and r1(7) = 0.4; and r2(1) = 0.5, r2(2) = 0.45, r2(3) = 0.4, r2(4) = 0.35, r2(5) = 0.3, r2(6) = 0.25, and r2(7) = 0.2. It is assumed that the terminal device determines, based on the first configuration information, that there are three monitoring spans in one slot of the scheduling cell, a corresponding monitoring span pattern (X, Y) is (4, 3), and a monitoring capability upper limit C1 corresponding to each monitoring span on a single CC is 36. When the terminal device determines that both a search space set for scheduling the scheduling cell and search space sets for scheduling the two scheduled cells are configured in a first monitoring span, a monitoring capability upper limit corresponding to the first monitoring span is C(1) = r1(1) * C1 + M(1) * r2 * C1 = 1 * 48 + 2 * 0.5 * 48, that is, 96. When the terminal device determines that only a search space set for scheduling the scheduling cell is configured in a second monitoring span, a monitoring capability upper limit corresponding to the second monitoring span is 1 * 48 + 0 * 0.45 * 48, that is, 48. When the terminal device determines that a search space set for scheduling one scheduled cell is configured in a third monitoring span, a monitoring capability upper limit corresponding to the third monitoring span is 0 * 48 + 1 * 0.4 * 48, that is, 19.2. A rounding up operation or a rounding down operation may be performed on the monitoring capability upper limit to obtain 20 or 19. In this case, the terminal device may monitor the PDCCH in each monitoring span based on a corresponding monitoring capability upper limit.

Further, similar to the manner 4 and the manner 5, a maximum value max{C(i)} in determined monitoring capability upper limits corresponding to all the monitoring spans, that is, max{96, 48, 20} = 96, may be determined as the first monitoring capability. To be specific, the monitoring capability upper limits corresponding to all the monitoring spans are 96.

For example, FIG. 10 is a schematic diagram of a scenario in which a pattern obtained through combination is an invalid configuration according to an embodiment of this application. As shown in FIG. 10, the terminal device separately determines, based on the configuration information of the scheduling cell and configuration information of the scheduled cell, a monitoring span pattern corresponding to each cell. It is assumed that the terminal device separately reports second capability reports in the scheduling cell CC 1 and the scheduled cell CC 2, and the second capability reports are both {(7,3), (4,3)}. As shown in FIG. 10, a second monitoring span pattern corresponding to the scheduling cell includes N1 monitoring spans, where N1 is equal to 3. A third monitoring span pattern corresponding to the scheduled cell includes N2 monitoring spans, where N2 is equal to 3. A monitoring span corresponding to the scheduling cell CC 1 and a monitoring span corresponding to the scheduled cell CC 2 that partially overlap in time domain may be combined into a monitoring span in a first monitoring span pattern in the scheduling cell. A first monitoring span pattern obtained through combination includes N monitoring spans, where N is equal to 3. After all monitoring spans are combined to obtain a new monitoring span, a monitoring span pattern (X, Y) in the scheduling cell is (5, 4). Because a number of consecutive time-domain symbols included in a first monitoring span is equal to 4, 4 is not a value of Y corresponding to any monitoring span in the PDCCH capability report sent by the terminal device. The value of Y herein is a number of consecutive time-domain symbols that is included in a monitoring span and that is supported by the terminal device. The methods described in the manner 1 to manner 5 may be used for determining a monitoring capability upper limit corresponding to each monitoring span. Therefore, the terminal device considers that the first configuration information is invalid information, and sends an RRC connection reconfiguration failure message to the network device.

According to the communication method provided in embodiments of this application, the terminal device and the network device may determine a monitoring span pattern in a slot in the CA scenario based on the first configuration information configured by the network device for the terminal device, determine an actual monitoring capability in each monitoring span in the monitoring span pattern based on a capability supported by the terminal device, and send and monitor a downlink control channel in the scheduling cell based on the actual monitoring capability, to obtain the downlink control information of the scheduling cell or the scheduled cell. This can resolve a problem of excessively long monitoring time caused by monitoring downlink control information of cells one by one at a slot granularity, and improve monitoring efficiency. In addition, data channels of the scheduling cell and the scheduled cell can be scheduled by using a monitoring span as a scheduling granularity, to shorten a scheduling period and improve scheduling efficiency.

It may be understood that, to implement functions in the foregoing embodiments, the network device and the terminal device include corresponding hardware structures and/or software modules for performing the functions. A person of ordinary skill in the art should easily be aware that, in combination with the units and the method steps in the examples described in the embodiments disclosed in this application, this application can be implemented by hardware or a combination of hardware and computer software. Whether a function is performed by hardware or hardware driven by computer software depends on particular application scenarios and design constraints of the technical solutions.

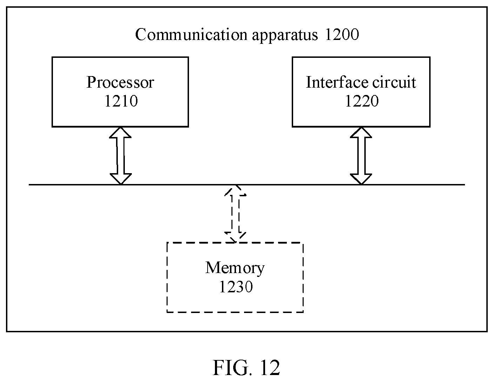

FIG. 11 and FIG. 12 are schematic diagrams 1 and 2 of possible structures of communication apparatuses according to embodiments of this application. These communication apparatuses can be configured to implement functions of the terminal device or the network device in the foregoing method embodiments, and therefore can also implement beneficial effects of the foregoing method embodiments. In embodiments of this application, the communication apparatus may be the terminal device shown in FIG. 1, or may be the network device shown in FIG. 1, or may be a module or a component (for example, a chip) applied to the terminal device or the network device.

As shown in FIG. 11, the communication apparatus 1100 includes a processing unit 1110 and a transceiver unit 1120. The communication apparatus 1100 is configured to implement the functions of the terminal device or the network device in the method embodiment shown in FIG. 4.

When the communication apparatus 1100 is configured to implement the functions of the terminal device in the method embodiment shown in FIG. 4, the transceiver unit 1120 is configured to: receive first configuration information from the network device, send a first capability report and/or a second capability report to the network device, and the like. The processing unit 1110 is configured to: determine a first monitoring span pattern based on a search space configuration of a scheduling cell and a search space configuration of a scheduled cell, control the transceiver unit 1120 to monitor a first downlink control channel based on the first monitoring span pattern, and the like.

When the communication apparatus 1100 is configured to implement the functions of the network device in the method embodiment shown in FIG. 4, the transceiver unit 1120 is configured to: send the first configuration information to the terminal device, receive the first capability report and/or the second capability report from the terminal device, and the like. The processing unit 1110 is configured to: determine the first monitoring span pattern based on the search space configuration of the scheduling cell and the search space configuration of the scheduled cell, control the transceiver unit 1120 to send the first downlink control channel based on the first monitoring span pattern, and the like.

Optionally, the communication apparatus 1100 shown in FIG. 11 may further include a storage unit (not shown in FIG. 11), and the storage unit stores a program or instructions. When the processing unit 1110 executes the program or the instructions, the communication apparatus 1100 may perform the functions of the terminal device or the network device in the communication method shown in FIG. 4.

More detailed description about the processing unit 1110 and the transceiver unit 1120 may be directly obtained from related description in the method embodiment shown in FIG. 4, and details are not described herein again.

As shown in FIG. 12, the communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to store instructions executed by the processor 1210, or input data required by the processor 1210 to run the instructions, or data generated after the processor 1210 runs the instructions.

When the communication apparatus 1200 is configured to implement the method shown in FIG. 4, the processor 1210 is configured to perform the functions of the processing unit 1110, and the interface circuit 1220 is configured to perform the functions of the transceiver unit 1120.

When the communication apparatus is a chip applied to a terminal device, the chip of the terminal device implements the functions of the terminal device in the foregoing method embodiments. The chip of the terminal device receives information from another module (for example, a radio frequency module or an antenna) in the terminal device, where the information is sent by a network device to the terminal device. Alternatively, the chip of the terminal device sends information to another module (for example, a radio frequency module or an antenna) in the terminal device, where the information is sent by the terminal device to a network device.

When the communication apparatus is a chip applied to a network device, the chip of the network device implements the functions of the network device in the foregoing method embodiments. The chip of the network device receives information from another module (for example, a radio frequency module or an antenna) in the network device, where the information is sent by a terminal device to the network device. Alternatively, the chip of the network device sends information to another module (for example, a radio frequency module or an antenna) in the network device, where the information is sent by the network device to a terminal device.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of random access memories (random access memory, RAM) may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used for implementing the foregoing embodiments, all or some of the embodiments may be implemented in a form of a computer program product. The computer program product includes one or more computer instructions or computer programs. When the computer instructions or the computer programs are loaded and executed on the computer, the procedure or functions according to some embodiments of this application are all or partially generated. The computer may be a general-purpose computer, a special-purpose computer, a computer network, or other programmable apparatuses. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, or may represent an "and/or" relationship. A specific meaning depends on a context.

In this application, "at least one" means one or more, and "a plurality of" means two or more. "At least one item (piece) of the following" or a similar expression thereof indicates any combination of these items, including any combination of singular items (pieces) or plural items (pieces). For example, at least one (piece) of a, b, or c may represent: a, b, c, a-b, a-c, b-c, or a-b-c, where a, b, and c may be singular or plural.

It should be understood that serial numbers of the foregoing processes do not mean execution sequences in embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed systems, apparatuses, and methods may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate. Parts displayed as units may or may not be physical units, and may be located in one position or may be distributed on a plurality of network units. Some or all of the units may be selected according to actual requirements to achieve the objectives of the solutions in the embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method performed by a terminal device, the method comprising:
receiving (S401) first configuration information, wherein the first configuration information comprises first indication information and second indication information, the first indication information indicates a search space configuration of a scheduling cell, and the second indication information indicates a search space configuration of at least one scheduled cell corresponding to the scheduling cell;
determining (S402) a first monitoring span pattern based on the search space configuration of the scheduling cell and the search space configuration of the scheduled cell, wherein the first monitoring span pattern comprises N monitoring spans in a first time unit, and N is a positive integer equal to or greater than 2, and wherein the first time unit is a time granularity equal to or smaller than a length of a slot; and
monitoring (S403) a first downlink control channel based on the first monitoring span pattern, wherein the first downlink control channel carries downlink control information of the scheduling cell or downlink control information of the scheduled cell,
**characterized in that** the monitoring a first downlink control channel based on the first monitoring span pattern comprises:
determining a first monitoring capability based on the search space configuration of the scheduling cell, the search space configuration of the scheduled cell, and information about a capability supported by a terminal device, wherein the first monitoring capability comprises a monitoring capability of monitoring a downlink control channel by the terminal device in each of the N monitoring spans; and
monitoring the first downlink control channel based on the first monitoring capability;
wherein the first monitoring capability is max{C(i)}, and C(i) is a monitoring capability in an i^{th} monitoring span in the N monitoring spans; and $C \left(i\right) = r 1 * C 1 + M \left(i\right) * r 2 * C 1 ,$ wherein
C1 is a monitoring capability of monitoring a downlink control channel of one cell by the terminal device in each of the N monitoring spans, M(i) is a number of scheduled cells that are configured in the i^{th} monitoring span and that correspond to the scheduling cell, r1 and r2 are real numbers less than or equal to 1 and greater than 0, and i is a positive integer less than or equal to N.

2. The method according to claim 1, wherein the method further comprises:
sending a first capability report, wherein the first capability report is used for indicating the information about the capability supported by the terminal device, and the first capability report comprises a mapping relationship between a reference number of cells for downlink control channel blind detection and the monitoring capability of the terminal device in each of the N monitoring spans.

3. The method according to any one of claims 1 to 2, wherein the determining a first monitoring span pattern based on the search space configuration of the scheduling cell and the search space configuration of the scheduled cell specifically comprises:
determining a second monitoring span pattern of the scheduling cell based on the search space configuration of the scheduling cell, wherein the second monitoring span pattern comprises N1 monitoring spans in the first time unit, and N1 is a positive integer;
determining a third monitoring span pattern of a first scheduled cell based on a search space configuration of the first scheduled cell, wherein the third monitoring span pattern comprises N2 monitoring spans in the first time unit, N2 is a positive integer, and the first scheduled cell is one scheduled cell in the scheduled cell; and
determining the N monitoring spans based on the N1 monitoring spans and the N2 monitoring spans.

4. A communication method performed by a network device, the method comprising:
sending (S401) first configuration information to a terminal device, wherein the first configuration information comprises first indication information and second indication information, the first indication information indicates a search space configuration of a scheduling cell, and the second indication information indicates a search space configuration of at least one scheduled cell corresponding to the scheduling cell;
determining (S402) a first monitoring span pattern based on the search space configuration of the scheduling cell and the search space configuration of the scheduled cell, wherein the first monitoring span pattern comprises N monitoring spans in a first time unit, and N is a positive integer equal to or greater than 2, and wherein the first time unit is a time granularity equal to or smaller than a length of a slot; and
sending (S403) a first downlink control channel based on the first monitoring span pattern, wherein the first downlink control channel carries downlink control information of the scheduling cell or downlink control information of the scheduled cell,
wherein the method further comprises:
determining a first monitoring capability based on the search space configuration of the scheduling cell, the search space configuration of the scheduled cell, and information about a capability supported by the terminal device, wherein the first monitoring capability comprises a monitoring capability of monitoring a downlink control channel by the terminal device in each of the N monitoring spans; and
sending the first downlink control channel based on the first monitoring capability;
**characterized in that** the first monitoring capability is max{C(i)}, and C(i) is a monitoring capability in an i^{th} monitoring span in the N monitoring spans; and $C \left(i\right) = r 1 * C 1 + M \left(i\right) * r 2 * C 1 ,$ wherein
C1 is a monitoring capability of monitoring a downlink control channel of one cell by the terminal device in each of the N monitoring spans, M(i) is a number of scheduled cells that are configured in the i^{th} monitoring span and that correspond to the scheduling cell, r1 and r2 are real numbers less than or equal to 1 and greater than 0, and i is a positive integer less than or equal to N.

5. The method according to claim 4, wherein the determining a first monitoring capability based on information about a capability supported by the terminal device specifically comprises:
receiving a first capability report, wherein the first capability report is used for indicating the information about the capability supported by the terminal device, and the first capability report comprises a mapping relationship between a reference number of cells for downlink control channel blind detection and the monitoring capability of the terminal device in each of the N monitoring spans; and
determining the first monitoring capability based on the mapping relationship.

6. A communication apparatus (1100), comprising means for performing the method according to any one of claims 1 to 3 or the method according to any one of claims 4 to 5.

7. A computer-readable storage medium, wherein the storage medium stores instructions; and when the instructions are executed by a communication apparatus, the method according to any one of claims 1 to 3 or the method according to any one of claims 4 to 5 is implemented.

## Patentansprüche

1. Kommunikationsverfahren, das durch eine Endgerätevorrichtung ausgeführt wird, wobei das Verfahren Folgendes umfasst:
Empfangen (S401) erster Konfigurationsinformationen, wobei die ersten Konfigurationsinformationen erste Angabeinformationen und zweite Angabeinformationen umfassen, die ersten Angabeinformationen eine Suchraumkonfiguration einer Planungszelle angeben und die zweiten Angabeinformationen eine Suchraumkonfiguration wenigstens einer geplanten Zelle angeben, die der Planungszelle entspricht;
Bestimmen (S402) eines ersten Überwachungsspannenmusters basierend auf der Suchraumkonfiguration der Planungszelle und der Suchraumkonfiguration der geplanten Zelle, wobei das erste Überwachungsspannenmuster N Überwachungsspannen in einer ersten Zeiteinheit umfasst und N eine positive ganze Zahl gleich oder größer als 2 ist und wobei die erste Zeiteinheit eine Zeitgranularität gleich oder kleiner als eine Länge eines Schlitzes ist; und
Überwachen (S403) eines ersten Abwärtsstrecken-Steuerkanals basierend auf dem ersten Überwachungsspannenmuster, wobei der erste Abwärtsstrecken-Steuerkanal Abwärtsstrecken-Steuerinformationen der Planungszelle oder Abwärtsstrecken-Steuerinformationen der geplanten Zelle führt,
**dadurch gekennzeichnet, dass** das Überwachen eines ersten Abwärtsstrecken-Steuerkanals basierend auf dem ersten Überwachungsspannenmuster Folgendes umfasst:
Bestimmen einer ersten Überwachungsfähigkeit basierend auf der Suchraumkonfiguration der Planungszelle, der Suchraumkonfiguration der geplanten Zelle und den Informationen über eine Fähigkeit, die durch eine Endgerätevorrichtung unterstützt wird, wobei die erste Überwachungsfähigkeit eine Überwachungsfähigkeit zum Überwachen eines Abwärtsstrecken-Steuerkanals durch die Endgerätevorrichtung in jeder der N Überwachungsspannen umfasst; und
Überwachen des ersten Abwärtsstrecken-Steuerkanals basierend auf der ersten Überwachungsfähigkeit;
wobei die erste Überwachungsfähigkeit max{C(i)} ist und C(i) eine Überwachungsfähigkeit in einer i^{ten}-Überwachungsspanne in den N Überwachungsspannen ist; und $C \left(i\right) = r 1 * C 1 + M \left(i\right) * r 2 * C 1 ,$ wobei
C1 eine Überwachungsfähigkeit zum Überwachen eines Abwärtsstrecken-Steuerkanals einer Zelle durch die Endgerätevorrichtung in jeder der N Überwachungsspannen ist, M(i) eine Anzahl der geplanten Zellen ist, die in der i^{ten}-Überwachungsspanne konfiguriert sind und die der Planungszelle entsprechen, r1 und r2 reelle Zahlen kleiner als oder gleich 1 und größer als 0 sind und i eine positive ganze Zahl kleiner als oder gleich N ist.

2. Verfahren nach Anspruch 1, wobei das Verfahren ferner Folgendes umfasst:
Senden eines ersten Fähigkeitsberichts, wobei der erste Fähigkeitsbericht zum Angeben der Informationen über die durch die Endgerätevorrichtung unterstützte Fähigkeit verwendet wird und der erste Fähigkeitsbericht eine Abbildungsbeziehung zwischen einer Referenzanzahl von Zellen für die Abwärtsstrecken-Steuerkanal-Blinddetektion und der Überwachungsfähigkeit der Endgerätevorrichtung in jeder der N Überwachungsspannen umfasst.

3. Verfahren nach einem der Ansprüche 1 bis 2, wobei das Bestimmen eines ersten Überwachungsspannenmusters basierend auf der Suchraumkonfiguration der Planungszelle und der Suchraumkonfiguration der geplanten Zelle spezifisch Folgendes umfasst:
Bestimmen eines zweiten Überwachungsspannenmusters der Planungszelle basierend auf der Suchraumkonfiguration der Planungszelle, wobei das zweite Überwachungsspannenmuster N1 Überwachungsspannen in der ersten Zeiteinheit umfasst und N1 eine positive ganze Zahl ist;
Bestimmen eines dritten Überwachungsspannenmusters einer ersten geplanten Zelle basierend auf einer Suchraumkonfiguration der ersten geplanten Zelle, wobei das dritte Überwachungsspannenmuster N2 Überwachungsspannen in der ersten Zeiteinheit umfasst, N2 eine positive ganze Zahl ist und die erste geplante Zelle eine geplante Zelle in der geplanten Zelle ist; und
Bestimmen der N Überwachungsspannen basierend auf den N1 Überwachungsspannen und den N2 Überwachungsspannen.

4. Kommunikationsverfahren, das durch eine Endgerätevorrichtung ausgeführt wird, wobei das Verfahren Folgendes umfasst:
Senden (S401) erster Konfigurationsinformationen an eine Endgerätevorrichtung, wobei die ersten Konfigurationsinformationen erste Angabeinformationen und zweite Angabeinformationen umfassen, die ersten Angabeinformationen eine Suchraumkonfiguration einer Planungszelle angeben und die zweiten Angabeinformationen eine Suchraumkonfiguration wenigstens einer geplanten Zelle angeben, die der Planungszelle entspricht;
Bestimmen (S402) eines ersten Überwachungsspannenmusters basierend auf der Suchraumkonfiguration der Planungszelle und der Suchraumkonfiguration der geplanten Zelle, wobei das erste Überwachungsspannenmuster N Überwachungsspannen in einer ersten Zeiteinheit umfasst und N eine positive ganze Zahl gleich oder größer als 2 ist und wobei die erste Zeiteinheit eine Zeitgranularität gleich oder kleiner als eine Länge eines Schlitzes ist; und
Senden (S403) eines ersten Abwärtsstrecken-Steuerkanals basierend auf dem ersten Überwachungsspannenmuster, wobei der erste Abwärtsstrecken-Steuerkanal Abwärtsstrecken-Steuerinformationen der Planungszelle oder Abwärtsstrecken-Steuerinformationen der geplanten Zelle führt,
wobei das Verfahren ferner Folgendes umfasst:
Bestimmen einer ersten Überwachungsfähigkeit basierend auf der Suchraumkonfiguration der Planungszelle, der Suchraumkonfiguration der geplanten Zelle und den Informationen über eine Fähigkeit, die durch die Endgerätevorrichtung unterstützt wird, wobei die erste Überwachungsfähigkeit eine Überwachungsfähigkeit zum Überwachen eines Abwärtsstrecken-Steuerkanals durch die Endgerätevorrichtung in jeder der N Überwachungsspannen umfasst; und
Senden des ersten Abwärtsstrecken-Steuerkanals basierend auf der ersten Überwachungsfähigkeit;
**dadurch gekennzeichnet, dass** die erste Überwachungsfähigkeit max{C(i)} ist und C(i) eine Überwachungsfähigkeit in einer i^{ten}-Überwachungsspanne in den N Überwachungsspannen ist; und $C \left(i\right) = r 1 * C 1 + M \left(i\right) * r 2 * C 1 ,$ wobei
C1 eine Überwachungsfähigkeit zum Überwachen eines Abwärtsstrecken-Steuerkanals einer Zelle durch die Endgerätevorrichtung in jeder der N Überwachungsspannen ist, M(i) eine Anzahl der geplanten Zellen ist, die in der i^{ten}-Überwachungsspanne konfiguriert sind und die der Planungszelle entsprechen, r1 und r2 reelle Zahlen kleiner als oder gleich 1 und größer als 0 sind und i eine positive ganze Zahl kleiner als oder gleich N ist.

5. Verfahren nach Anspruch 4, wobei das Bestimmen einer ersten Überwachungsfähigkeit basierend auf den Informationen über eine Fähigkeit, die durch die Endgerätevorrichtung unterstützt wird, spezifisch Folgendes umfasst:
Empfangen eines ersten Fähigkeitsberichts, wobei der erste Fähigkeitsbericht zum Angeben der Informationen über die durch die Endgerätevorrichtung unterstützte Fähigkeit verwendet wird und der erste Fähigkeitsbericht eine Abbildungsbeziehung zwischen einer Referenzanzahl von Zellen für die Abwärtsstrecken-Steuerkanal-Blinddetektion und der Überwachungsfähigkeit der Endgerätevorrichtung in jeder der N Überwachungsspannen umfasst; und
Bestimmen der ersten Überwachungsfähigkeit basierend auf der Abbildungsbeziehung.

6. Kommunikationsvorrichtung (1100), die Mittel zum Ausführen des Verfahrens nach einem der Ansprüche 1 bis 3 oder des Verfahrens nach einem der Ansprüche 4 bis 5 umfasst.

7. Computerlesbares Speichermedium, wobei das Speichermedium Anweisungen speichert; wobei, wenn die Anweisungen durch eine Kommunikationsvorrichtung ausgeführt werden, das Verfahren nach einem der Ansprüche 1 bis 3 oder das Verfahren nach einem der Ansprüche 4 bis 5 implementiert wird.

## Revendications

1. Procédé de communication réalisé par un dispositif terminal, le procédé comprenant les étapes suivantes :
recevoir (S401) des premières informations de configuration, les premières informations de configuration comprenant des premières informations d'indication et des deuxièmes informations d'indication, les premières informations d'indication indiquant une configuration d'espace de recherche d'une cellule d'ordonnancement, et les deuxièmes informations d'indication indiquant une configuration d'espace de recherche d'au moins une cellule ordonnancée correspondant à la cellule d'ordonnancement ;
déterminer (S402) un premier schéma de plage de surveillance sur la base de la configuration de l'espace de recherche de la cellule d'ordonnancement et la configuration de l'espace de recherche de la cellule ordonnancée, où le premier schéma de plage de surveillance comprend N plages de surveillance dans une première unité de temps, et N est un entier positif égal ou supérieur à 2, et où la première unité de temps est une granularité temporelle égale ou inférieure à la durée d'un créneau temporel ; et
surveiller (S403) un premier canal de commande de liaison descendante sur la base du premier schéma de plage de surveillance, où le premier canal de commande de liaison descendante transporte des informations de commande de liaison descendante de la cellule d'ordonnancement ou des informations de commande de liaison descendante de la cellule ordonnancée,
**caractérisé en ce que** la surveillance d'un premier canal de commande de liaison descendante sur la base du premier schéma de plage de surveillance comprend les étapes suivantes :
déterminer une première capacité de surveillance sur la base de la configuration de l'espace de recherche de la cellule d'ordonnancement, de la configuration de l'espace de recherche de la cellule ordonnancée, et des informations sur une capacité supportée par un dispositif terminal, la première capacité de surveillance comprenant une capacité de surveillance de la surveillance d'un canal de commande de liaison descendante par le dispositif terminal dans chacune des N plages de surveillance ; et
surveiller le premier canal de commande de liaison descendante sur la base de la première capacité de surveillance ;
où la première capacité de surveillance est max{C(i)}, et C(i) est une capacité de surveillance dans une i^{ème} plage de surveillance des N plages de surveillance ; et $C \left(i\right) = r 1 * C 1 + M \left(i\right) * r 2 * C 1 ,$ où
C1 est une capacité de surveillance de la surveillance d'un canal de commande de liaison descendante d'une cellule par le dispositif terminal dans chacune des N plages de surveillance, M(i) est un nombre de cellules ordonnancées configurées dans la i^{ème} plage de surveillance et correspondant à la cellule d'ordonnancement, r1 et r2 sont des nombres réels inférieurs ou égaux à 1 et supérieurs à 0, et i est un nombre entier positif inférieur ou égal à N.

2. Procédé selon la revendication 1, dans lequel le procédé comprend en outre l'étape suivante :
envoyer un premier rapport de capacité, le premier rapport de capacité étant utilisé pour indiquer les informations sur la capacité supportée par le dispositif terminal, et le premier rapport de capacité comprenant une relation de mappage entre un nombre de référence de cellules pour la détection aveugle des canaux de commande de liaison descendante et la capacité de surveillance du dispositif terminal dans chacune des N plages de surveillance.

3. Procédé selon l'une quelconque des revendications 1 et 2, dans lequel la détermination d'un premier schéma de plage de surveillance sur la base de la configuration de l'espace de recherche de la cellule d'ordonnancement et de la configuration de l'espace de recherche de la cellule ordonnancée comprend spécifiquement les étapes suivantes :
déterminer un deuxième schéma de plage de surveillance de la cellule d'ordonnancement sur la base de la configuration de l'espace de recherche de la cellule d'ordonnancement, le deuxième schéma de plage de surveillance comprenant N1 plages de surveillance dans la première unité de temps, et N1 étant un entier positif ;
déterminer un troisième schéma de plage de surveillance d'une première cellule ordonnancée sur la base d'une configuration d'espace de recherche de la première cellule ordonnancée, le troisième schéma de plage de surveillance comprenant N2 plages de surveillance dans la première unité de temps, N2 étant un entier positif, et la première cellule ordonnancée étant une cellule ordonnancée dans la cellule ordonnancée ; et
déterminer les N plages de surveillance sur la base des N1 plages de surveillance et des N2 plages de surveillance.

4. Procédé de communication réalisé par un premier dispositif réseau, le procédé comprenant les étapes suivantes :
envoyer (S401) des premières informations de configuration à un dispositif terminal, les premières informations de configuration comprenant des premières informations d'indication et des deuxièmes informations d'indication, les premières informations d'indication indiquant une configuration d'espace de recherche d'une cellule d'ordonnancement, et les deuxièmes informations d'indication indiquant une configuration d'espace de recherche d'au moins une cellule ordonnancée correspondant à la cellule d'ordonnancement ;
déterminer (S402) un premier schéma de plage de surveillance sur la base de la configuration de l'espace de recherche de la cellule d'ordonnancement et la configuration de l'espace de recherche de la cellule ordonnancée, où le premier schéma de plage de surveillance comprend N plages de surveillance dans une première unité de temps, et N est un entier positif égal ou supérieur à 2, et où la première unité de temps est une granularité temporelle égale ou inférieure à la durée d'un créneau temporel ; et
envoyer (S403) un premier canal de commande de liaison descendante sur la base du premier schéma de plage de surveillance, où le premier canal de commande de liaison descendante transporte des informations de commande de liaison descendante de la cellule d'ordonnancement ou des informations de commande de liaison descendante de la cellule ordonnancée,
le procédé comprenant en outre les étapes suivantes :
déterminer une première capacité de surveillance sur la base de la configuration de l'espace de recherche de la cellule d'ordonnancement, de la configuration de l'espace de recherche de la cellule ordonnancée, et des informations sur une capacité supportée par le dispositif terminal, la première capacité de surveillance comprenant une capacité de surveillance de la surveillance d'un canal de commande de liaison descendante par le dispositif terminal dans chacune des N plages de surveillance ; et
envoyer le premier canal de commande de liaison descendante sur la base de la première capacité de surveillance ;
**caractérisé en ce que** la première capacité de surveillance est max{C(i)}, et C(i) est une capacité de surveillance dans une i^{ème} plage de surveillance des N plages de surveillance ; et $C \left(i\right) = r 1 * C 1 + M \left(i\right) * r 2 * C 1 ,$ où
C1 est une capacité de surveillance de la surveillance d'un canal de commande de liaison descendante d'une cellule par le dispositif terminal dans chacune des N plages de surveillance, M(i) est un nombre de cellules ordonnancées configurées dans la ième plage de surveillance et correspondant à la cellule d'ordonnancement, r1 et r2 sont des nombres réels inférieurs ou égaux à 1 et supérieurs à 0, et i est un nombre entier positif inférieur ou égal à N.

5. Procédé selon la revendication 4, dans lequel la détermination d'une première capacité de surveillance, sur la base d'informations sur une capacité supportée par le dispositif terminal, comprend spécifiquement les étapes suivantes :
recevoir un premier rapport de capacité, le premier rapport de capacité étant utilisé pour indiquer les informations sur la capacité supportée par le dispositif terminal, et le premier rapport de capacité comprenant une relation de mappage entre un nombre de référence de cellules pour la détection aveugle des canaux de commande de liaison descendante et la capacité de surveillance du dispositif terminal dans chacune des N plages de surveillance ; et
déterminer la première capacité de surveillance sur la base de la relation de mappage.

6. Appareil de communication (1100), comprenant des moyens pour réaliser soit le procédé selon l'une quelconque des revendications 1 à 3, soit le procédé selon l'une quelconque des revendications 4 et 5.

7. Support de stockage lisible par ordinateur, le support de stockage lisible par ordinateur stockant des instructions et, lorsque les instructions sont exécutées par un appareil de communication, le procédé selon l'une quelconque des revendications 1 à 3 ou le procédé selon l'une quelconque des revendications 4 et 5 étant mis en œuvre.
